# EUROPÄISCHE PATENTSCHRIFT

(11) **EP 1 404 750 B1**
(45) Veröffentlichungstag und Bekanntmachung des Hinweises auf die Patenterteilung: **23.04.2008**
(21) Anmeldenummer: 02743193.1
(22) Anmeldetag: 14.06.2002
(51) Int. Cl.: C08K 3/00, C08K 5/00, C08K 5/3492, C08K 5/523, C08L 67/02

(54) **FLAMMGESCHÜTZTE POLYESTERFORMMASSEN MIT ZNS**
FLAME-PROOFED POLYESTER MOULDING MATERIALS WITH ZNS
MATIERES MOULABLES POLYESTER IGNIFUGES ET CONTENANT ZNS

(30) Priorität: 27.06.2001 DE 10130834
(43) Veröffentlichungstag der Anmeldung: 07.04.2004
(73) Patentinhaber: LANXESS Deutschland GmbH, 51369 Leverkusen (DE)
(72) Erfinder: BIENMÜLLER, Matthias, 47803 Krefeld (DE); WAGNER, Michael, 47443 Moers (DE)
(86) Internationale Anmeldenummer: PCT/EP2002/006543
(87) Internationale Veröffentlichungsnummer: WO 2003/002643

(56) Entgegenhaltungen:
- WO-A-00/11071
- WO-A-00/11085
- WO-A-01/81470

## Beschreibung

Die vorliegende Erfindung betrifft halogenfrei flammgeschützte Polyesterformmassen. Darüber hinaus betrifft die vorliegende Erfindung die Verwendung dieser Formmassen zur Herstellung von Formkörpern, Folien oder Fasern sowie die Formkörper, Folien und Fasern selbst.

Flammfest ausgerüstete Polyesterformmassen sind beispielsweise in den Bereichen Elektrotechnik und Elektronik von großer Bedeutung und werden u.a. zur Herstellung von Trägem spannungsführender Teile verwendet. Neben guter Flammwidrigkeit müssen die Bauteile auch gute mechanische und elektrische Eigenschaften aufweisen, wobei verstärkt die Bereitstellung halogenfreier Formmassen gefordert wird.

Insbesondere für Elektro- und Elektronikanwendungen ist es von Bedeutung, dass die eingesetzten Kunststoff-Formmassen keine negativen Auswirkungen auf das Korrosionsverhalten von direkt mit ihnen in Kontakt gebrachten Metallen oder Legierungen haben, um eine Fehlfunktion der Bauteile zu vermeiden.

Da Polyesterformmassen in solchen Anwendungen oft erhöhten Dauergebrauchstemperaturen ausgesetzt werden, ist die Beständigkeit der Formmasse gegen Heißluftalterung ebenfalls ein wichtiger Aspekt. Hierzu zählt unter anderem das Verfärbungsverhalten der Kunststoff Formmassen bei erhöhter Dauergebrauchstemperatur, wobei ein erkennbares Nachdunkeln der entsprechenden Kunststoff-Formkörper insbesondere bei den oft in hellen Farben gehaltenen Elektro- und Elektronik-Bauteilen generell nicht erwünscht ist. Diesbezüglich hat sich beispielsweise gezeigt, dass insbesondere Resorcindiphosphat-haltige Kunststoff-Formmassen zu Verfärbungen bei Heißluftalterung führen. Ebenso unerwünscht ist die Migration von Bestandteilen der Kunststoff-Formmasse, welche zu einer nachhaltigen Veränderung des Eigenschaftsprofils wie Kontaktbelegung von spannungsführenden Teilen, mechanischen Einbußen oder Einbußen bei der Flammwidrigkeit der Kunststoff-Formmasse beziehungsweise des Kunststoff-Formteils führen kann.

Auf diesem Gebiet hat es in der Vergangenheit bereits einige Entwicklungen gegeben.

So offenbart JP-A 3-281652 Polyalkylentercphthalatharze, die als Flammschutz ein Melamin-Cyanursäure-Addukt und ein Phosphat oder Phosphonat sowie zusätzlich Füllmaterial enthalten.

JP-A 6-157 880 offenbart verstärkte Polyalkylcnterephthalate, die als Flammschutzmittel Melamincyanurat sowie eine Phosphorverbindung enthalten.

JP-A 9-157 503 offenbart flammgeschützte Polyesterzusammensetzungen enthaltend Melamincyanurat, Phosphorsäureester und spezielle Entformungsmittel.

Aus EP-A 903 370 sind flammgeschützte verstärkte Polyesterkomponenten bekannt, die eine Kombination aus Melaminpyrophosphat und einem Phosphatoligomer enthalten.

WO 00/11085 offenbart Polyesterformmassen, die Melamincyanurat, ein Phosphat, Füllstoff und spezielle Entformungsmittel enthalten.

WO 00/1 1071 offenbart Polyesterzusammensetzungen, welche Stickstoffverbindungen, Phosphorverbindungen, Metallsalze und Stabilisator enthalten.

Aus WO 01/81470 sind flammgeschützte Polyesterzusammensetzungen bekannt, die eine Stickstoffverbindung, eine Phosphorverbindung, Zinksulfid und optional Additive enthalten, wobei letztere Glasfasern sein können.

Es besteht aber weiterhin ein Bedarf an Polyesterformmassen, die sich durch eine verbesserte Kombination aus guten mechanischen und Flammschutzeigenschaften, einem guten Korrosionsverhalten, guten elektrische Eigenschaften sowie einer guten Stabilität gegenüber Heißluftalterung auszeichnen.

Es wurde nun überraschend gefunden, dass Polyesterformmassen, die eine Flammschutzmittelkombination aus erfindungsgemäßen Mengen eines organischen Phosphates, wobei Bisphenol-A-Diphosphat ganz besonders bevorzugt ist und einer organischen Stickstoffverbindung, wobei Melamincyanurat ganz besonders bevorzugt ist, in Kombination mit Zinksulfid enthalten, das gewünschte Eigenschaftsprofil aufwcisen.

Gegenstand der Erfindung sind somit flammwidrige thermoplastische Formmassen, enthaltend
A) einen oder mehrere Polyester,
B) 10 bis 40 Gew.-% einer Flammschutzkomponente enthaltend als Stickstoffverbindung B.1) Melamincyanurat, Melamin, Melaminborat, Melaminoxalat, Melaminphosphat prim., Melaminphosphat sec. und Melaminpyrophosphat sec., polymeres Melaminphosphat sowie Neopentylglycoiborsäuremelamin, Guanidincarbonat, Guanidincyanurat prim., Guanidinphosphat prim., Guanidinphosphat sec., Guanidinsulfat prim., Guanidinsulfat sec., Pentaerythritborsäureguanidin, Neopentylglycolborsäureguanidin, Harnstoffphosphat grün, Harnstoffcyanurat, Melem, Melon, Ammoniumpolyphosphat, Tris(hydroxyethyl)isocyanurat oder dessen Umsetzungsprodukte mit Carbonsäuren, Benzoguanamin und dessen Addukte bzw. Salze sowie dessen am Stickstoff substituierte Produkte sowie deren Salze und Addukte, Allantoin-Verbindungen, sowie deren Salze mit Phosphorsäure, Borsäure oder Pyrophosphorsäure sowie Glycolurile oder deren Salze oder Ammoniumsalze und eine Phosphorverbindung B.2) der Formel (I) 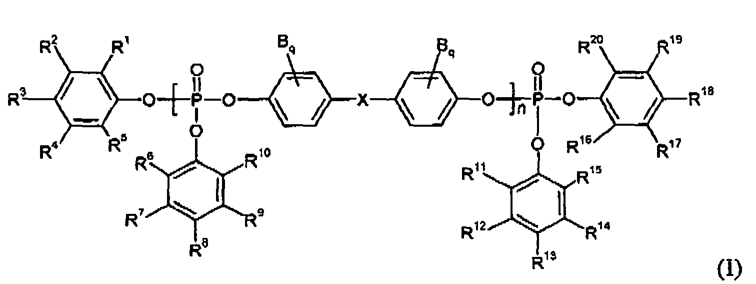 worin
   R¹ bis R²⁰ unabhängig voneinander Wasserstoff, eine lineare oder verzweigte Alkylgruppe bis zu 6 C-Atomen,
   - n: einen Durchschnittswert von 0,5 bis 50 und
   - B: C₁-C₁₂-Alkyl oder Halogen,
   - q: jeweils unabhängig voneinander 0, 1 oder 2,
   - X: eine Einfachbindung, C=O, S, O, SO₂, C(CH₃)₂, C₁-C₅-Alkylen, C₂-C₅-Alkyliden, C₅-C₆-Cycloalkyliden, C₆-C₁₂-Arylen, an das weitere aromatische gegebenenfalls Heteroatome enthaltende Ringe kondensiert sein können, oder ein Rest gemäß der Formel (II) oder (III) 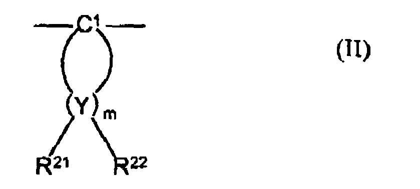 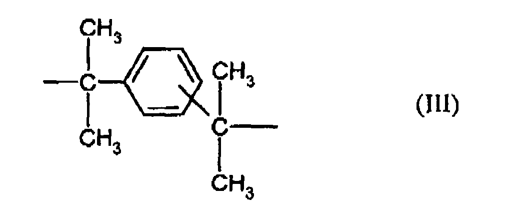
   worin
   - Y: Kohlenstoff und
   - R²¹ und R²²: für jedes Y individuell wählbar, unabhängig voneinander Wasserstoff oder C₁-C₆-Alkyl,
   - m: eine ganze Zahl von 4 bis 7, bevorzugt 4 oder 5, mit der Maßgabe, dass an mindestens einem Atom Y R²¹ und R²² gleichzeitig Alkyl ist,
   bedeutet,
C) 0,01 bis 5 Gew.-%, bezogen auf die Gesamtzusammensetzung Zinksulfid,
D) wenigstens 0,3 Gew.% bezogen auf die Gesamtzusammensetzung Polyolefinwachse, sowie
E) 0 bis 50 Gew.-%, bezogen auf die Gesamtzusammensetzung eines oder mehrerer Füll- und Verstärkungsstoffe
wobei sich die Summe der Anteile der Komponenten zu 100 Gew.-% ergänzt.

### Komponente A

Polyester im Sinne der vorliegenden Erfindung sind zum einen Polyalkylenterephthalate, d. h. Reaktionsprodukte aus vorzugsweise aromatischen Dicarbonsäuren oder ihren reaktionsfähigen Derivaten (z.B. Dimethylestern oder Anhydriden) und aliphatischen, cycloaliphatischen oder araliphatischen Diolen und Mischungen dieser Reaktionsprodukte, zum anderen auch vollaromatische Polyester, die später näher beschrieben werden.

Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 FF, Karl-Hanser-Verlag, München 1973).

Bevorzugte Polyalkylenterephthalate enthalten mindestens 80, vorzugsweise 90 mol-%, bezogen auf die Dicarbonsäure, Terephthalsäurereste und mindestens 80, vorzugsweise mindestens 90 mol-%, bezogen auf die Diolkomponente, Ethylenglykol- und/oder Propandiol-1,3- und/oder Butandiol-1,4-reste.

Die bevorzugten Polyalkylenterephthalate können neben Terephthalsäureresten bis zu 20 mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate können neben Ethylen- bzw. Propandiol-1,3- bzw. Butandiol-1,4-glykolresten bis zu 20 mol-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1,6, Cyclohexan-dimethanol-1,4, 3-Methylpentandiol-2,4, 2-Methylpentandiol-2,4, 2,2,4-Trimethylpentandiol-1,3 und -1,6,2-Ethylhexandiol-1,3 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-β-hydroxyethoxyphenyl)-propan und 2,2-bis-(4-hydroxypropoxyphenyl)-propan (DE-OS 24 07 674, 24 07 776, 27 15 932).

Die Polyalkylenterephthalate können durch Einbau relativ kleiner Mengen drei- oder vierwertiger Alkohole oder drei- oder vierbasischer Carbonsäuren, wie sie z.B. in der DE-OS 19 00 270 und der US-PS 3 692 744 beschrieben sind, verzweigt werden. Beispiele für bevorzugte Verzweigungsmittel sind Trimesinsäure, Trimellitsäure, Trimethylolethan und -propan und Pentaerythrit.

Es ist ratsam, nicht mehr als 1 mol-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol und/oder Propandiol-1,3 und/oder Butandiol-1,4 hergestellt worden sind (Polyethylen-, Polypropylen- und Polybutylenterephthalat), sowie Mischungen dieser Polyalkylenterephthalate. Im Rahmen der vorliegenden Erfindung ist die Verwendung von Mischungen aus Polybutylen- und Polyethylenterephthalat ganz besonders bevorzugt.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die Polyalkylenterephthalate besitzen im allgemeinen eine intrinsische Viskosität von ca. 0,4 bis 1,5, vorzugsweise 0,5 bis 1,3, jeweils gemessen in Phenol/o-Dichlorbenzol (1:1 Gew.-Teile) bei 25°C.

Bei den ebenfalls geeigneten vollaromatischen Polyestern handelt es sich um die Reaktionsprodukte aus aromatischen Dicarbonsäuren oder deren reaktiven Derivaten und entsprechenden aromatischen Dihydroxyverbindungen.

Als aromatische Dicarbonsäuren lassen sich die bei der Beschreibung der Polyalkylenterephthalate bereits diskutierten aromatischen Verbindungen einsetzen. Hierbei sind Mischungen aus 5 bis 100 mol-% Isophthalsäure und 0 bis 95 mol-% Terephthalsäure, insbesondere Mischungen von ca. 80 % Terephthalsäure mit 20% Isophthalsäure bis etwa äquivalente Mischungen dieser beiden Säuren bevorzugt.

Die ferner eingesetzten aromatischen Dihydroxyverbindungen lassen sich durch die folgende Formel (IV) beschreiben, 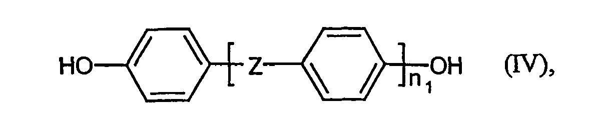 worin Z für eine Alkylen- oder Cycloalkylengruppe mit bis zu 8 Kohlenstoffatomen, eine Arylengruppe mit bis zu 12 Kohlenstoffatomen, eine Carbonylgruppe, ein Sauerstoff- oder Schwefelatom, eine Sulfonylgruppe oder eine chemische Bindung steht und n₁ einen Wert von 0 bis 2 hat. Die Verbindungen können an den Phenyleneinheiten jeweils C₁-C₆-Alkyl- oder Alkoxygruppen sowie Fluor, Chlor oder Brom als Substituenten tragen.

Als Vertreter dieser Substanzen werden Dihydroxyphenyl, Di-(hydroxyphenyl)alkan, Di-(hydroxyphenyl)cycloalkan, Di-(hydroxyphenyl)sulfid, Di-(hydroxyphenyl)ether, Di-(hydroxyphenyl)keton, Di-(hydroxyphenyl)sulfoxid, Di-(hydroxyphenyl), α,α'-Di-(hydroxyphenyl)dialkylbenzol, Di-(hydroxyphenyl)sulfon, Di-(hydroxybenzoyl)-benzol, Resorcin und Hydrochinon sowie deren kemalkylierten oder kemhalogenierten Derivate erwähnt.

Aus der vorgenannten Gruppe sind 4,4'-Dihydroxydiphenyl, 2,4-Di-(4'-hydroxyphenyl)-2-methylbutan, α,α'-Di-(4-hydroxyphenyl)-p-diisopropylbenzol, 2,2-Di-(3'-methyl-4'-hydroxyphenyl)propan sowie 2,2-Di-(3'-chlor-4'-hydroxyphenyl)propan bevorzugt.

Besonders bevorzugt sind ferner 2,2-Di-(3',5'-dimethyl-4'-hydroxyphenyl)propan, 2,2-Di-(4'-hydroxyphenyl)propan, 4,4'-Dihydroxydiphenylsulfon, 2,2-Di(3',5-dichlordihydroxyphenyl)propan, 1,1-Di-(4'-hydroxyphenyl)cyclohexan und 3,4'-Dihydroxybenzophenon.

Es können auch Mischungen der genannten Diolverbindungen verwendet werden.

Neben reinen Polyalkylenterephthalaten und reinen vollaromatischen Polyestern können darüber hinaus auch beliebige Mischungen dieser sowie der nachfolgend genannten Polyester eingesetzt werden.

Unter Polyestern werden des weiteren Polycarbonate und Polyestercarbonate verstanden.

Polycarbonate und Polyestercarbonate sind literaturbekannt oder nach literaturbekannten Verfahren herstellbar (zur Herstellung von Polycarbonaten siehe beispielsweise Schnell, "Chemistry and Physics of Polycarbonates", Interscience Publishers, 1964 sowie die DE-A 1 495 626, DE-A 2 232 877, DE-A 2 703 376, DE-A 2 714 544, DE-A 3 000 610, DE-A 3 832 396; zur Herstellung Polyestercarbonate z. B. DE-A 3 077 934).

Die Herstellung aromatischer Polycarbonate erfolgt z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielseise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (V) 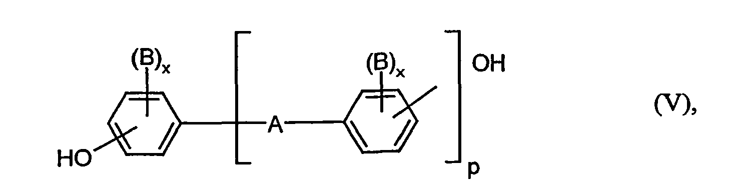 wobei
- A: eine Einfachbindung, C₁-C₅-Alkylen, C₂-C₅-Alkyliden, C₅-C₆-Cycloalkyliden, -O-, -SO-, -CO-, -S-, -SO₂-, C₆-C₁₂-Arylen, an das weitere aromatische gegebenenfalls Heteroatome enthaltende Ringe kondensiert sein können,oder einen Rest der Formel (VI) oder (VII) 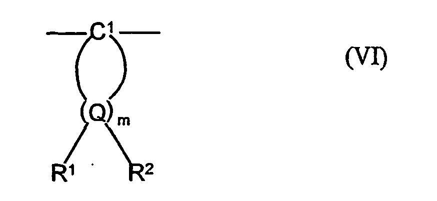 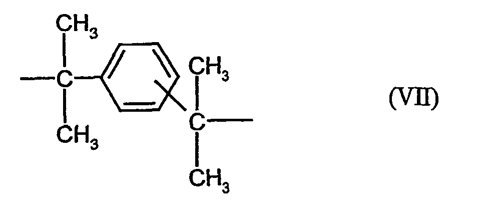
- B: jeweils C₁-C₁₂-Alkyl, vorzugsweise Methyl oder Halogen, vorzugsweise Chlor und/oder Brom bedeuten,
- x: jeweils unabhängig voneinander 0, oder 2,
- p: 1 oder 0 sind, und
- R¹ und R²: für jedes Q individuell wählbar, unabhängig voneinander Wasserstoff oder C₁-C₆-Alkyl, vorzugsweise Wasserstoff, Methyl oder Ethyl,
- Q: Kohlenstoff und
- m: eine ganze Zahl von 4 bis 7, bevorzugt 4 oder 5 bedeuten, mit der Maßgabe, dass an mindestens einen Atom Q R¹ und R² gleichzeitig Alkyl sind,
bedeutet.

Bevorzugte Diphenole sind Hydrochinon, Resocin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenyl-sulfon sowie deren di- und tetrabromierten oder chlorierten Derviate wie beispielsweise 2,2-Bis(3-Chlor-4-nydroxyphenyl)-propan, 2,2-Bis-(3,5-dichlor-4-hydroxyphenyl)-propan oder 2,2-Bis-(3,5-dibrom-4-hydroxyphenyl)-propan.

Insbesondere bevorzugt ist 2,2-Bis-(4-hydroxyphenyl)-propan (Bisphenol-A).

Die Diphenole können einzeln oder in beliebigen Mischungen eingesetzt werden.
Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-A 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 mol-%, und 10 mol-%, bezogen auf die Molsumme der jeweils eingesetzten Diphenole.

Die thermoplastischen, aromatischen Polycarbonate haben mittlere Gewichtsmittelmolekulargewichte (M_{w}, gemessen z. B. durch Ultrazentrifuge oder Streulichtmessung) von 10 000 bis 200 000, vorzugsweise 20 000 bis 80 000.

Die thermoplastischen, aromatischen Polycarbonate können in bekannter Weise verzweigt sein, und zwar vorzugsweise durch den Einbau von 0,05 bis 2,0 mol-%, bezogen auf die Summe der eingesetzten Diphenole, an trifunktionellen oder mehr als trifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate können auch 1 bis 25 Gew.-%, vorzugsweise 2,5 bis 25 Gew.-% (bezogen auf die Gesamtmenge an einzusetzenden Diphenolen) Polydiorganosiloxane mit Hydroxy-aryloxy-Endgruppen eingesetzt werden. Diese sind bekannt (s. beispielsweise US-A 3 419 634) bzw. nach literaturbekannten Verfahren herstellbar. Die Herstellung Polydiorganosiloxan-haltiger Copolycarbonate wird z. B. in DE-A 3 334 782 beschrieben.

Bevorzugte Polycarbonate sind neben den Bisphenol-A-Homopolycarbonaten die Copolycarbonate von Bisphenol-A mit bis zu 15 mol-%, bezogen auf die Molsummen an Diphenolen, anderer als die als bevorzugt bzw. besonders bevorzugt genannten Diphenole, insbesondere 2,2-Bis(3,5-dibrom-4-hydroxyphenyl)-propan.

Aromatische Dicarbonsäuredihalogenide zur Herstellung von aromatischen Polyestercarbonaten sind beispielsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁-C₂₂-Alkylgruppen oder durch Halogenatome substituiert sein können, sowie aliphatische C₂-C₂₂-Monocarbonsäurechloride in Betracht.

Die Menge an Kettenabbrechern beträgt jeweils 0,1 bis 10 mol-%, bezogen im Falle der phenolischen Kettenabbrecher auf Mole Diphenole und Falle von Monocarbonsäurechlorid-Kettenabbrecher auf Mole Dicarbonsäuredichloride.

Die aromatischen Polyestercarbonate können auch aromatische Hydroxycarbonsäuren als Bausteine enthalten.

Die aromatischen Polyestercarbonate können sowohl linear als auch in bekannter Weise verzweigt sein (siehe dazu ebenfalls DE-A 2 940 024 und DE-A 3 007 934).

Als Verzweigungsmittel können beispielsweise tri- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 mol-% (bezogen auf eingesetzte Dicarbonsäuredichloride) oder tri- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 mol-% bezogen auf eingesetzte Diphenole verwendet werden. Phenolische Verzweigungsmittel können mit den Diphenolen vorgelegt, Säurechlorid-Vercweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 mol-%, insbesondere bis zu 80 mol-%, besonders bevorzugt bis zu 50 mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,18 bis 1,4, vorzugsweise 1,22 bis 1,3 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch untereinander eingesetzt werden.

Eingesetzt werden können darüber hinaus alle bekannten Polyesterblockcopolymere wie z. B. Copolyetherester wie in US-A 3 651 014 beschrieben.

### Komponente B

Im Rahmen der vorliegenden Erfindung wird zur Flammfestausrüstung der Polyesterformmasse eine Mischung einer Stickstoffverbindung B.1) und einer Phosphorverbindung B.2) in einer Menge von zusammen 10 bis 40 Gew.-%, bevorzugt 17 bis 24 Gew.-%, besonders bevorzugt 19 bis 24 Gew.-%, bezogen auf die gesamte Formmasse, eingesetzt.

Hierbei liegt der bevorzugte Einzelgehalt an Stickstoffverbindung B.1) bei 8 bis 12 Gew.-% sowie der bevorzugte Gehalt an Phosphorverbindung B.2) bei 9 bis 12 Gew.%, jeweils bezogen auf die gesamte Formmasse.

Als Stickstoffverbindung B.1) werden Melamincyanurat, Melamin, Melaminborat, Melaminoxalat, Melaminphosphat prim., Melaminphosphat sec. und Melaminpyrophosphat sec., polymeres Melaminphosphat sowie Neopentylglycolborsäuremelamin, Guanidincarbonat, Guanidincyanurat prim., Guanidinphosphat prim., Guanidinphosphat sec., Guanidinsulfat prim., Guanidinsulfat sec., Pentaerythritborsäureguanidin, Neopentylglycolborsäureguanidin, Harnstoffphosphat grün, Harnstoffcyanurat, Melem, Melon, Ammoniumpolyphosphat, Tris(hydroxyethyl)isoeyanurat oder dessen Umsetzungsprodukte mit Carbonsäuren, Benzoguanamin und dessen Addukte bzw. Salze sowie dessen am Stickstoff substituierte Produkte sowie deren Salze und Addukte, Allantoin-Verbindungen, sowie deren Salze mit Phosphorsäure, Borsäure oder Pyrophosphorsäure sowie Glycolurile oder deren Salze oder Ammoniumsalze eingesetzt.

Unter der im Rahmen der vorliegenden Erfindung ganz besonders bevorzugten Stickstoffverbindung Melamincyanurat versteht man das Reaktionsprodukt aus vorzugsweise äquimolaren Mengen von Melamin und Cyanursäure bzw. Isocyanursäure. Hierzu zählen u.a. sämtliche handelsüblichen und kommerziell verfügbaren Produktqualitäten. Beispiele hierfür sind u.a. Melapur^{®} MC 25 (Fa. DSM Melapur, Heerlen, Holland) sowie Budit^{®} 315 (Fa. Budenheim, Budenheim, Deutschland). Das verwendete Melamincyanurat besteht aus Partikeln mit mittleren Teilchendurchmessern von 0,1 µm bis 100 µm, vorzugsweise von 0,1 µm bis 25 µm, besonders bevorzugt 0,1 µm bis 7 µm und kann oberflächenbehandelt bzw. mit bekannten Mitteln beschichtet sein. Hierzu zählen u. a. organische Verbindungen, die in monomerer, oligomerer und/oder polymerer Form auf das Melamincyanurat aufgebracht sein können. Beschichtungen mit anorganischen Komponenten sind ebenfalls möglich. Beispielsweise können Beschichtungssysteme verwendet werden, die auf Silicium-haltigen Verbindungen wie organofunktionalisierten Silanen, Aminosilanen oder Organosiloxanen basieren.

Melamincyanurat wird üblicherweise aus den Ausgangsstoffen in wässrigem Medium bei Temperaturen zwischen 90 und 100°C erhalten.

Bei der Phosphorverbindung B.2) handelt es sich um eine Substanz der allgemeinen Formel (I), 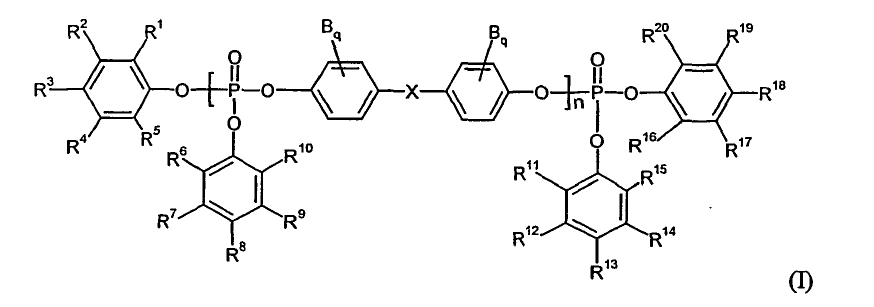 worin
- R¹ bis R²⁰: unabhängig voneinander Wasserstoff, eine lineare oder verzweigte Alkyl-gruppe bis zu 6 C-Atomen
- n: einen Durchschnittswert von 0,5 bis 50 und
- B: jeweils C₁-C₁₂-Alkyl, vorzugsweise Methyl, oder Halogen, vorzugsweise Chlor oder Brom
- q: jeweils unabhängig voneinander 0, 1 oder 2,
- X: eine Einfachbindung, C=O, S, O, SO₂ C(CH₃)₂, C₁-C₅-Alkylen, C₂-C₅-Alkyliden, C₅-C₆-Cycloalkyliden, C₆-C₁₂-Arylen, an das weitere aromatische gegebenenfalls Heteroatome enthaltende Ringe kondensiert sein können, oder einen Rest der Formel (II) oder (III) 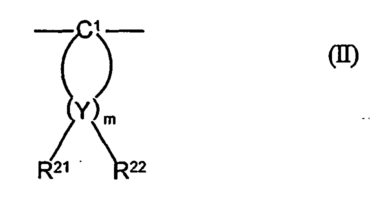 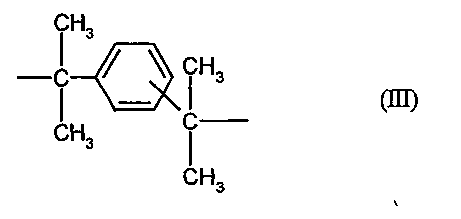 mit Y Kohlenstoff und
- R²¹ und R²²: für jedes Y individuell wählbar, unabhängig voneinander Wasserstoff oder C₁-C₆-Alkyl, vorzugsweise Wasserstoff, Methyl oder Ethyl,
- m: eine ganze Zahl von 4 bis 7, bevorzugt 4 oder 5, mit der Maßgabe, dass an mindestens einem Atom Y R²¹ und R²² gleichzeitig Alkyl sind,
bedeuten.

Bevorzugt sind solche Phosphorverbindungen der Formel (I), in denen R1 bis R20 unabhängig voneinander Wasserstoff oder einen Methylrest bedeuten und bei denen q = 0 ist. Insbesondere bevorzugt sind Verbindungen, in denen X SO₂ O, S, C=O, C₂-C₅-Allkyliden, C₅-C₆-Cycloalkyliden oder C₆-C₁₂-Arylen bedeutet. Verbindungen mit X = C(CH₃)₂ sind ganz besonders bevorzugt.

Der Oligomerisierungsgrad n ergibt sich als Durchschnittswert aus dem Herstellverfahren der aufgeführten phosphorhaltigen Verbindungen. Der Oligomerisierungsgrad liegt hierbei in der Regel bei n <10. Bevorzugt sind Verbindungen mit n von 0,5 bis 5, besonders bevorzugt 0,7 bis 2,5. Ganz besonders bevorzugt sind Verbindungen, die einen hohen Anteil an Molekülen mit n = 1 zwischen 60% und 100%, bevorzugt zwischen 70 und 100 %, besonders bevorzugt zwischen 79 % und 100 % aufweisen. Herstellbedingt können die obigen Verbindungen auch geringe Mengen an Triphenylphosphat enthalten. Die Mengen an dieser Substanz liegen meist unter 5 Gew.-%, wobei im vorliegenden Zusammenhang Verbindungen bevorzugt sind, deren Triphenylphosphatgehalt im Bereich von 0 bis 5 %, bevorzugt von 0 bis 4 %, besonders bevorzugt von 0 bis 2,5 % bezogen auf B.2 liegt.

Die Phosphorverbindungen gemäß Komponente B.2 sind bekannt (vgl. z.B. EP-A 363 608, EP-A 640 655) oder lassen sich nach bekannten Methoden in analoger Weise herstellen (z.B. Ullmanns Encyklopädie der technischen Chemie, Bd. 18, S. 301 ff. 1979; Houben-Weyl, Methoden der organischen Chemie, Bd. 12/1, S. 43; Beilstein Bd. 6, S. 177).

Das im Rahmen der vorliegenden Erfindung ganz besonders bevorzugte Bisphenol-A-Diphosphat (auch bezeichnet als Bisphenol-A-*bis*-diphenylphosphat oder Tetraphenyl-Bisphenol-A-diphosphat, BDP) ist im Handel kommerziell u.a. als Fyroflex BDP (Fa. Akzo Nobel Chemicals BV, Amersfoort, Holland), Ncendx P-30 (Fa. Albemarle, Baton Rouge, Louisiana, USA), Reofos BAPP (Fa. Great Lakes, West Lafayette, Indiana, USA) oder CR 741 (Fa. Daihachi, Osaka, Japan) erhältlich.

### Komponente C

Als Komponente C) wird Zinksulfid in Mengen von 0,01 bis 5 Gew.-%, bevorzugt 0,1 bis 4 Gew.%, besonders bevorzugt 0,4 bis 3,5 Gew.-% eingesetzt, wiederum bezogen auf die gesamte Formmasse. In bestimmten Ausführungsformen der vorliegenden Erfindung ist die Verwendung von 0,4 bis 1,0 Gew.-% an ZnS ganz besonders bevorzugt- Das Zinksulfid wird in der Regel als partikelförmiger Feststoff eingesetzt. Kommerziell erhältliche Produkte sind beispielsweise Sachtolith^{®} HDS oder Sachtolith^{®} HD (beide Fa. Sachtleben, Duisburg, Deutschland). Die Verwendung von kompaktiertem Material sowie von Masterbatchen in einem polymeren Trägermaterial ist ebenso möglich. Das Zinksulfid kann oberflächenbehandelt bzw. mit bekannten Mitteln beschichtet sein. Hierzu zählen u.a. organische Verbindungen, die in monomerer, oligomerer und/oder polymerer Form aufgebracht sein können. Beschichtungen mit anorganischen Komponenten sind ebenfalls möglich. Beispielsweise können Beschichtungssysteme verwendet werden, die auf Silicium-haltigen Verbindungen wie organopunktionalisierten Silanen oder Organosiloxanen basieren.

Der zusätzliche Einsatz von kautschukelastischen Polymerisaten (oft auch als Schlagzähmodifikator, Elastomer oder Kautschuk bezeichnet) erweist sich in manchen Fällen bezüglich des mechanischen Eigenschaftsprofils als vorteilhaft.

Es handelt sich dabei um Copolymerisate, die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961), Seiten 392 bis 406 sowie in der Monographie von C.B. Bucknall, "Toughened Plastics" (Applied Science Publishers, London, 1977) beschrieben.

Bevorzugt sind solche Polymere, wie sie in WO 00/46419 beschrieben werden.

Die erfindungsgemäßen Formmassen können weitere Additive, wie Mittel gegen Wärmezersetzung, Mittel gegen Wärmevernetzung, Mittel gegen Beschädigung durch ultraviolettes Licht, Weichmacher, Fließ- und Verarbeitungshilfsmittel, flammhemmende Substanzen, Gleit- und Entformungsmittel, Nukleierungsmittel, Antistatika, Stabilisatoren sowie Farbstoffe und Pigmente enthalten. ZnS (Komponente C) ist explizit als Komponente D ausgeschlossen.

Als Beispiele für Oxidationsverzögerer und Wärmestabilisatoren seien sterisch gehinderte Phenole und Phosphite, Hydrochinone, aromatische sekundäre Amine wie Diphenylamine, substituierte Vertreter dieser Gruppen sowie deren Mischungen genannt.

Als UV-Stabilisatoren seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Nigrosin und Anthrachinone als Farbmittel sowie andere Farbmittel zugesetzt werden.

Als Keimbildungsmittel können z.B. Natriumphenylphosphinat, Aluminiumoxid, Siliziumdioxid sowie bevorzugt Talkum eingesetzt werden.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid genannt.

Allgemein eingesetzte Gleit- und Entformungsmittel sind Esterwachse, Pentaerithrytetrastearat (PETS), langkettige Fettsäuren (z.B. Stearinsäure oder Behensäure), deren Salze (z.B. Ca- oder Tn-Stearat) sowie Amidderivate (z.B. Ethylen-bis-stearylamid) oder Montanwachse (Mischungen aus geradkettigen, gesättigten Carbonsäuren mit Kettenlängen von 28 bis 32 C-Atomen) sowie Polyolefinwachse wie z. B. Polyethylen- bzw. Polypropylenwachse.

### Komponente D

Als Komponente D enthalten die erfindungsgemäßen Formmassen wenigstens 0,3 Gew.-% bezogen auf die Gesamtzusammensetzung Polyolefinwachse. Unter einem Polyolefinwachs sind allgemein Polyolefine mit wachsartigem Charakter zu verstehen. Solche Verbindungen lassen sich durch dem Fachmann bekannte Verfahren entweder durch direkte Polymerisation olefinischer Basismonomere oder durch gezielte Depolymerisation aus Polymeren entsprechend höherer Molmassen erhalten und weisen üblicherweise geringe Molmassen (ca. 3000 bis 20000 g/mol) auf.

Substanzen vom Typ der Komponente D sind den Formmassen in Größenordnungen von 0,3 bis 40 Gew.%, bevorzugt 0,3 bis 30 Gew.-%, besonders bevorzugt 0,3 bis 10 Gew.-% zugesetzt.

### Komponente E

Als Komponente E enthält die Polyesterformmasse 0 bis 50 Gew.-%, bevorzugt 10 bis 40, besonders bevorzugt 10 bis 35 Gew.-% Füll- oder Verstärkungsstoffe zugesetzt.

Als faser- oder teilchenformige Füllstoffe und Verstärkungsstoffe für die erfindungsgemäßen Formmassen können Glasfasern, Glaskugeln, Glasgewebe, Glasmatten, Kohlenstofffasern, Aramidfasern, Kaliumtitanat-fasern, Naturfasern, amorphe Kieselsäure, Magnesiumcarbonat, Bariumsulfat, Feldspat, Glimmer, Silikate, Quarz, Talkum, Kaolin, Titandioxid, Wollastonit, u.a. zugesetzt werden, die auch oberflächenbehandelt sein können. Bevorzugte Verstärkungsstoffe sind handelsübliche Glasfasern. Die Glasfasern, die im allgemeinen einen Faserdurchmesser zwischen 8 und 18 µm haben, können als Endlosfasern oder als geschnittene oder gemahlene Glasfasern zugesetzt werden, wobei die Fasern mit einem geeigneten Schlichtesystem und einem Haftvermittler bzw. Haftvermittlersystem z.B. auf Silanbasis ausgerüstet sein können.

Geeignet sind auch nadelförmige mineralische Füllstoffe. Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8:1 bis 35:1, bevorzugt von 8:1 bis 11:1 auf. Der mineralische Füllstoff kann gegebenenfalls oberflächenbehandelt sein.

Im folgenden wird die Erfindung anhand konkreter Beispiele näher erläutert.

### Beispiele:

- Komponente A/1: PBT Pocan^{®} B 1300 00/000 (Fa. Bayer AG, Leverkusen, Deutschland)
- Komponente A/2: PBT Pocan^{®} B 1600 00/000 (Fa. Bayer AG, Leverkusen, Deutschland)
- Komponente A/3: PET RT 6011 (Fa. Kosa, Houston, Texas)
- Komponente B/1: Melamincyanurat (Melapur^{®} MC 25, Fa. DSM-Melapur, Heerlen, Holland)
- Komponente B/2: Bisphenol-A-Diphosphat (Reofos^{®} BAPP, Fa. Great Lakes, West Lafayette, Indiana, USA)
- Komponente B/3: Triphenylphosphat (Disflamoll^{®} TP, Fa. Bayer AG, Leverkusen, Deutschland)
- Komponente C: ZnS (Sachtolith^{®} HDS, Fa. Sachtleben, Duisburg, Deutschland)
- Komponente D₁: Entformungsmittel
- Komponente D₂: Stabilisator, 10 %iges Konzentrat in PBT Pocan^{®} B 1300 00/000
- Komponente E: Schnittglasfaser (CS 7962, Fa. Bayer AG, Leverkusen, Deutschland)

Die einzelnen Komponenten A) bis E) werden in den angegebenen Verhältnissen in einem Zweiwellenextruder des Typs ZSK 32 der Fa. Werner & Pfleiderer bei Temperaturen von 260°C gemischt, als Strang ausgetragen, bis zur Granulierfähigkeit abgekühlt und granuliert. Nach dem Trocknen erfolgt die Verarbeitung des Granulates bei Temperaturen von 260°C zu Normprüfkörpern, an denen die mechanischen, elektrischen sowie die Brandeigenschaften ermittelt werden.

Die Flammwidrigkeit von Kunststoffen wird nach der Methode UL94V (s. hierzu a) Underwriters Laboratories Inc. Standard of Safety, "Test for Flammability of Plastic Materials for Parts in Devices and Appliances", S14 ff, Northbrook 1998; b) J. Troitzsch, "International Plastics Flammability Handbook", S. 346 ff., Hanser Verlag, München 1990) bestimmt. Bewertet werden hierbei Nachbrennzeiten und Abtropfverhalten von ASTM-Normprüfkörpem.

Für die Einstufung eines flammgeschützten Kunststoffs in die Brandklasse UL94V-0 müssen im einzelnen die folgenden Kriterien erfüllt sein: bei einem Satz von 5 ASTM Normprüfkörpern (Maße: 127 x 12,7 x X, mit X = 3,2; 1,6 und 0,8 mm) dürfen alle Proben nach zweimaliger Beflammung von 10 Sekunden Dauer mit einer offenen Flamme definierter Höhe nicht länger als 10 Sekunden nachbrennen. Die Summe der Nachbrennzeiten bei 10 Beflammungen von 5 Proben darf nicht größer als 50 Sekunden sein. Zudem darf kein brennendes Abtropfen, vollständiges Abbrennen oder Nachglühen des jeweiligen Prüfkörpers von länger als 30 Sekunden erfolgen. Die Einstufung UL94V-1 verlangt, dass die Einzelnachbrennzeiten nicht länger als 30 Sekunden betragen und dass die Summe der Nachbrennzeiten von 10 Beflammungen von 5 Proben nicht größer als 250 Sekunden ist. Die Gesamtnachglühzeit darf nicht mehr als 250 Sekunden betragen. Die übrigen Kriterien sind identisch mit den oben erwähnten. Eine Einstufung in die Brandklasse UL94V-2 erfolgt dann, wenn es bei Erfüllen der übrigen Kriterien der UL94V-1 Einstufung zu einem brennenden Abtropfen kommt.

Eine weitere Prüfung der Flammwidrigkeit von Kunststoffen besteht in der Glühdrahtprüfung nach DIN IEC 695-2-1. Hierbei wird an 10 Prüfkörpern (beispielsweise an Platten der Geometrie 60 x 60 x 2 mm oder 1 mm) mit Hilfe eines glühenden Drahtes bei Temperaturen zwischen 550 und 960°C die maximale Temperatur ermittelt, bei der eine Nachbrennzeit von 30 Sekunden nicht überschritten wird und die Probe nicht brennend abtropft. Diese Prüfung ist besonders im Bereich Elektro/Elektronik von Interesse, da Bauelemente in elektronischen Erzeugnissen im Fehlerfall oder bei Überlastung derart hohe Temperaturen annehmen können, dass sich Teile in unmittelbarer Nähe entzünden können. In der Glühdrahtprüfung wird eine solche thermische Beanspruchung nachempfunden.

Auskunft über die elektrischen Eigenschaften der untersuchten Kunststoff Formmasse gibt die CTI-Prüfung nach DIN IEC112, bei der die Kriechstromfestigkeit des Materials ermittelt wird.

Angaben zu den mechanischen Eigenschaften eines Polymer-Compounds werden anhand des Zugversuches nach ISO 527 (Prüfung an Schulterstäben), des Biegeversuches nach ISO 178 (Prüfung an Flachstäben der Geometrie 80mm x 10mm x 4mm) sowie anhand des Schlagbiegeversuches nach Izod (ISO 180, Prüfung an Flachstäben der Geometrie 80mm x 10mm x 4mm) getroffen.

### Gewichtsverlust nach Heißluftalterung:

Zur Bestimmung des Gewichtsverlustes der durch Compoundierung erhaltenen Kunststoff-Formmassen nach Heißluftalterung wurden durch Spritzgießen Farbmusterplättchen der Geometrie 60mm x 40mm x 2mm hergestellt und jeweils 10 Tage bei 125°C sowie 155°C im Trockenschrank gelagert. Die Angabe des Gewichtsverlusts erfolgt in Prozent bezogen auf den spritzfrischen Prüfkörper.

**Tabelle 1**

| Komponente | Beispiel 1 | Beispiel 2 | Vergleich 1 | Vergleich 2 | Vergleich 3 |
|---|---|---|---|---|---|
| Gew.-Teile | | | | | |
| A/1 | 28,2 | 28,2 | 9,7 | 32,2 | 30,2 |
| A/2 | -- | -- | 17,0 | -- | -- |
| A/3 | 20,0 | 20,0 | 20,0 | 20,0 | 20,0 |
| B/1 | 8,0 | 10,0 | 10,0 | 8,0 | 10,0 |
| B/2 | 12 | 10,0 | -- | 8,0 | 8,0 |
| B/3 | -- | -- | 11,0 | -- | -- |
| C | 0,5 | 0,5 | 1,0 | 0,5 | 0,5 |
| D₁ | 0,3 | 0,3 | 0,3 | 0,3 | 0,3 |
| D₂ | 1,0 | 1,0 | 1,0 | 1,0 | 1,0 |
| E | 30,0 | 30,0 | 30,0 | 30,0 | 30,0 |
| Glühdrahtfestigkeit | 960°C | 960°C | 960°C | 700°C | 850°C |
| (IEC 695-2-1) | | | | | |
| 2 mm | | | | | |
| UL 94 (0,8 mm) | V-2 | V-2 | V-2 | V-2 | V-2 |
| Gewichtsverlust | n.g. | 0,16 % | 7,20 % | n.g. | n.g. |
| nach 10 d / 125°C | | | | | |
| Gewichtsverlust | n.g. | 0,22 % | 8,38 % | n.g. | n.g,. |
| nach 10 d/155°C | | | | | |
| CTI A (IEC 112) | n.g. | 450 V | 400 V | 425 V | n.g. |

| | | | | | |
|---|---|---|---|---|---|
| n.g. = nicht gemessen | | | | | |

Die erfindungsgemäßen Formmassen zeichnen sich gegenüber den Vergleichsbeispielen durch einen sehr geringen Gewichtsverlust bei längerer erhöhter Temperaturbelastung aus, was ein Vergleich von Beispiel 2 und Vergleich 1 deutlich macht. Dies bringt zum einen Verarbeitungsvorteile (z.B. Vermeidung von Belagbildung bei der Spritzgießverarbeitung) und gewährleistet zum anderen den Erhalt wesentlicher Materialeigenschaften wie der Flammwidrigkeit. Die Versuchsergebnisse zeigen zudem deutlich, dass insbesondere für eine maximale Glühdrahtfestigkeit bestimmte Mengen der Flammschutzadditive B/1 und B/2 notwendig sind (s. Vergleich 2, Vergleich 3).

### Beeurteilung des Korrosionsverhaltens an Metallstreifen:

Die Tests zur Beurteilung des Korrosionsverhaltens der Kunststoff Formmassen werden an ca. 50 mm langen, 6 mm breiten sowie 0,5 mm dicken Metallstreifen aus Messing, Kupfer und Bronze durchgeführt. Hierzu werden die Metallstreifen vor der Prüfung zunächst mit einer Bürste gereinigt, mit Wasser gewaschen und anschließend nach dem Putzen mit Aceton gründlich mit einem weichen Tuch trockengerieben. Die so behandelten Metallstreifen werden sodann derart in einen mit 150 ml Granulat befüllten Erlenmeyerkolben gegeben, dass ca. die Hälfte des jeweiligen Streifens senkrecht aus dem Granulat herausragt und die andere Hälfte gut mit Granulat bedeckt ist. Nach einer Standzeit von jeweils 21 Tagen bei 125°C sowie bei 155°C im Trockenschrank erfolgt eine visuelle Beurteilung der Metallstreifen hin auf Verfärbung beziehungsweise Kontaktbelegung. Die Ergebnisse sind in Tabelle 2 für zwei Beispiele dargestellt:

**Tabelle 2**

| | **Vergleich 1** | | **Beispiel 2** | |
|---|---|---|---|---|
| | Im Granulat | Über d. Granulat | Im Granulat | Über d. Granulat |
| 125°C | O | O | O/- | O/- |
| Messing | | | | |
| 155°C | O | - | - | - |
| 125°C | +/O | + | O/- | O |
| Kupfer | | | | |
| 155°C | ++ | + | O/- | O |
| 125°C | O/+ | O/+ | - | - |
| Bronze | | | | |
| 155°C | ++- | ++ | O/- | O/- |

| | | | | |
|---|---|---|---|---|
| Bewertungsskala Verfärbung / Kontaktbelegung: -- sehr gering, - gering, O mittel, + stark, ++ sehr stark | | | | |

Ein Vergleich der Korrosionsergebnisse von Beispiel 2 (erfindungsgemäß) und Vergleich 1 zeigt, dass Korrosion und Kontaktbelegung deutlich reduziert sind, was in Elektro/Elektronik-Anwendungen einen deutlichen Vorteil bezüglich der Anwendungssicherheit darstellt.

## Patentansprüche

1. Formmassen enthaltend
A) einen oder mehrere Polyester,
B) 10 bis 40 Gew.-% einer Flammschutzkomponente enthaltend als Stickstoffverbindung B.1) Melamincyanurat, Melamin, Melaminborat, Melaminoxalat, Melaminphosphat prim., Melaminphosphat sec. und Melaminpyrophosphat sec., polymeres Melaminphosphat sowie Neopentylglycolborsäuremelamin, Guanidincarbonat, Guanidincyanurat prim., Guanidinphosphat prim., Guanidinphosphat sec., Guanidinsulfat prim., Guanidinsulfat sec., Pentaerythritborsäureguanidin, Neopentylglycolborsäureguanidin, Harnstoffphosphat grün, Harnstoffcyanurat, Melem, Melon, Ammoniumpolyphosphat, Tris(hydroxyethyl)isocyanurat oder dessen Umsetzungsprodukte mit Carbonsäuren, Benzoguanamin und dessen Addukte bzw. Salze sowie dessen am Stickstoff substituierte Produkte sowie deren Salze und Addukte, Allantoin-Verbindungen, sowie deren Salze mit Phosphorsäure, Borsäure oder Pyrophosphorsäure sowie Glycolurile oder deren Salze oder Ammoniumsalze und eine Phosphorverbindung B.2) der Formel (I) 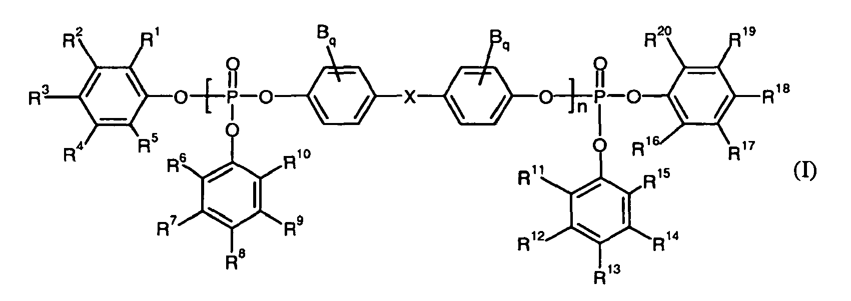 worin
R¹ bis R²⁰ unabhängig voneinander Wasserstoff, eine lineare oder verzweigte Alkylgruppe bis zu 6 C-Atomen,
n einen Durchschnittswert von 0,5 bis 50 und
B C₁-C₁₂-Alkyl oder Halogen,
q jeweils unabhängig voneinander 0, 1 oder 2,
X eine Einfachbindung, C=O, S, O, SO₂, C(CH₃)₂, C₁-C₅-Alkylen, C₂-C₅-Alkyliden, C₅-C₆-Cycloalkyliden, C₆-C₁₂-Arylen, an das weitere aromatische gegebenenfalls Heteroatome enthaltende Ringe kondensiert sein können, oder einen Rest gemäß Formel (II) oder (III) 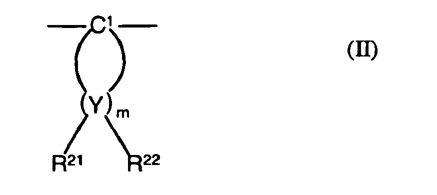 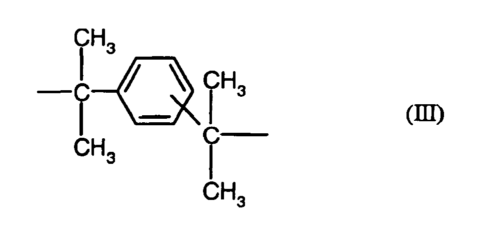
worin
Y Kohlenstoff und
R²¹ und R²² für jedes Y individuell wählbar, unabhängig voneinander Wasserstoff oder C₁-C₆-Alkyl,
m eine ganze Zahl von 4 bis 7, bevorzugt 4 oder 5, mit der Maßgabe, dass an mindestens einem Atom Y R²¹ und R²² gleichzeitig Alkyl ist,
bedeutet,
C) 0,01 bis 5 Gew.-% bezogen auf die Gesamtzusammensetzung Zinksulfid,
D) wenigstens 0,3 Gew.-% bezogen auf die Gesamtzusammensetzung Polyolefinwachse, sowie
E) 0 bis 50 Gew.-% bezogen auf die Gesamtzusammensetzung eines oder mehrerer Füll- und Verstärkungsstoffe
wobei sich die Summe der Anteile der Komponenten zu 100 Gew.-% ergänzt, dadruch **gekennzeichnet**, dass ein Polyolefinwachs enthalten ist.

2. Formmassen gemäß Anspruch 1, **dadurch gekennzeichnet, dass** das Polyolefinwachs zu 0,3 Gew.-% enthalten ist.

3. Formmassen enthaltend
A) einen oder mehrere Polyester,
B) 10 bis 40 Gew.% einer Flammschutzkomponente enthaltend als Stickstoffverbindung B.1) Melamincyanurat, Melamin, Melaminborat, Melaminoxalat, Melaminphosphat prim., Melaminphosphat sec. und Melaminpyrophosphat sec., polymeres Melaminphosphat sowie Neopentylglycolborsäuremelamin, Harnstoffphosphat grün, Ammoniumpolyphosphat, Allantoin-Verbindungen, sowie deren Salze mit Phosphorsäure, Borsäure oder Pyrophosphorsäure sowie Glycolurile oder deren Salze oder Ammoniumsalze und eine Phosphorverbindung B2.) der Formel (I) 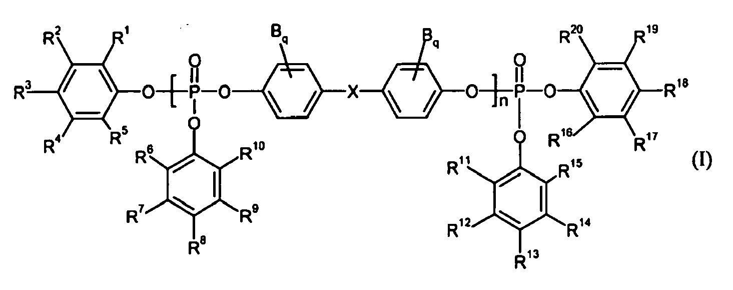 worin
R¹ bis R²⁰ unabhängig voneinander Wasserstoff, eine lineare oder verzweigte Alkylgruppe bis zu 6 C-Atomen,
n einen Durchschnittswert von 0,5 bis 50 und
B C₁-C₁₂-Alkyl oder Halogen,
q jeweils unabhängig voneinander 0, 1 oder 2,
X eine Einfachbindung, C=O, S, O, SO₂, C(CH₃)₂, C₁-C₅-Alkylen, C₂-C₅-Alkyliden, C₅-C₆-Cycloalkyliden, C₆-C₁₂-Arylen, an das weitere aromatische gegebenenfalls Heteroatome enthaltende Ringe kondensiert sein können, oder einen Rest gemäß Formel (II) oder (III) 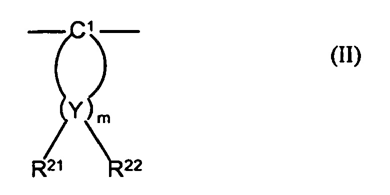 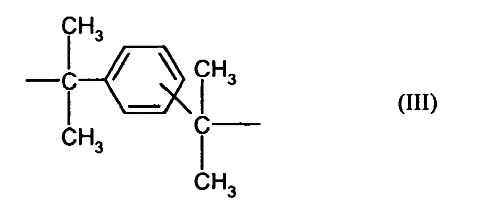
worin
Y Kohlenstoff und
R²¹ und R²² für jedes Y individuell wählbar, unabhängig voneinander Wasserstoff oder C₁-C₆-Alkyl,
m eine ganze Zahl von 4 bis 7, bevorzugt 4 oder 5, mit der Maßgabe, dass an mindestens einem Atom Y R²¹ und R²² gleichzeitig Alkyl ist,
bedeutet,
C) 0,01 bis 5 Gew.-% bezogen auf die Gesamtzusammensetzung Zinksulfid,
D) 0 bis 40 Gew.-% bezogen auf die Gesamtzusammensetzung weiterer Additive, sowie
E) 0 bis 50 Gew.-% bezogen auf die Gesamtzusammensetzung eines oder mehrerer Füll- und Verstärkungsstoffe
wobei sich die Summe der Anteile der Komponenten zu 100 Gew.-% ergänzt.

4. Formmassen gemäß einem der Ansprüche 1 bis 3, **dadurch gekennzeichnet, dass** Komponente A) ein Polyalkylenterephthalat oder eine Mischung mehrerer Polyalkylenterephthalate ist.

5. Formmassen gemäß einem der Anspüche 1 bis 3, **dadurch gekennzeichnet, dass** Komponente A) Polyethylenterephthalat, Polybutylenterephthalat oder eine Mischung dieser Verbindungen ist.

6. Formmassen gemäß einem oder mehrerer der vorstehenden Anspüche, **dadurch gekennzeichnet, dass** der Anteil der Flammschutzkomponente B) 17 bis 24 Gew.-% bezogen auf die Gesamtzusammensetzung beträgt.

7. Formmassen gemäß einem oder mehrerer der vorstehenden Anspüche, **dadurch gekennzeichnet, dass** der Anteil der Stickstoffverbindung B.1) 8 bis 12 Gew.-% bezogen auf die Gesamtzusammensetzung beträgt.

8. Formmassen gemäß einem oder mehrerer der vorstehenden Anspüche, **dadurch gekennzeichnet, dass** der Anteil der Phosphorverbindung B.2) 9 bis 12 Gew.-% bezogen auf die Gesamtzusammensetzung beträgt.

9. Formmassen gemäß einem der Ansprüche 1 bis 3, **dadurch gekennzeichnet, dass** die Stickstoffverbindung B.1) Melamincyanurat ist.

10. Formmassen gemäß einem oder mehrerer der vorstehenden Anspüchen, **dadurch gekennzeichnet, dass** die Phosphorverbindung B.2) Bisphenol *A-bis-*diphenylphosphat ist.

11. Formmassen gemäß einem der vorstehenden Ansprüche enthaltend weitere Additive ausgewählt aus Mitteln gegen Wärmezersetzung, Mitteln gegen Wärmevernetztung, Mitteln gegen Beschädigung durch ultraviolettes Licht, Weichmachern, Fließ- und Verarbeitungshilfsmitteln, flammhemmenden Substanzen, Gleit- und Entformungsmitteln, Nukleierungsmitteln, Antistatika, Stabilisatoren sowie Farbstoffen und Pigmenten.

12. Formmassen gemäß einem der vorstehenden Ansprüche enthaltend Glasfasern.

13. Verwendung von Formmassen gemäß einem der Anspüche 1 bis 12 zur Herstellung von Formkörpern, Folien oder Fasern.

14. Formkörper, Folien oder Fasern erhältlich aus Formmassen gemäß einem der Ansprüche 1 bis 12.

## Claims

1. Moulding compositions comprising
A) one or more polyesters,
B) 10 to 40% by weight of a flame retardant component containing as nitrogen compound B1) melamine cyanurate, melamine, melamine borate, melamine oxalate, melamine phosphate prim., melamine phosphate sec. and melamine pyrophosphate sec., polymeric melamine phosphate and neopentyl glycol boric acid melamine, guanidine carbonate, guanidine cyanurate prim., guanidine phosphate prim., guanidine phosphate sec., guanidine sulphate prim., guanidine sulphate sec., pentaerythritol boric acid guanidine, neopentyl glycol boric acid guanidine, urea phosphate green, urea cyanurate, melem, melon, ammonium polyphosphate, trishydroxyethyl isocyanurate or its reaction products with carboxylic acids, benzoguanamine and its adducts or its salts and also its nitrogen-substituted products and also their salts and adducts, allantoin compounds, and also their salts with phosphoric acid, boric acid or pyrophosphoric acid, and glycol urils or their salts or ammonium salts and a phosphorus compound B2) of the formula (I) 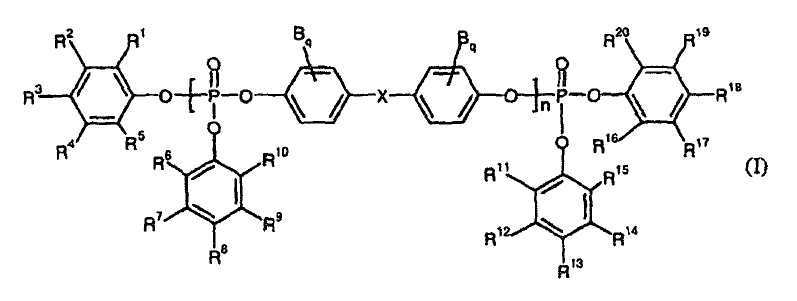 where
R¹ to R²⁰, independently of each other, denote hydrogen or a linear or branched alkyl group of up to 6 carbon atoms,
n denotes an average value of 0.5 to 50, and
B denotes C₁-C₁₂-alkyl or halogen,
q in either occurrence independently denotes 0, 1 or 2,
X denotes a single bond C=O, S, O, SO₂, C(CH₃)₂, C₁-C₅-alkylene, C₂-C₅-alkylidene, C₅-C₆-cycloalkylidene, C₆-C₁₂-arylene, onto which further aromatic rings, which optionally contain hetero atoms, may be condensed, or a radical corresponding to formula (II) or (III) 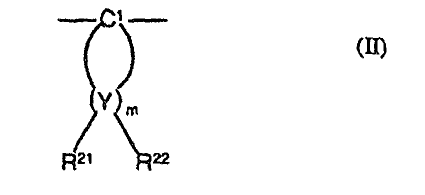 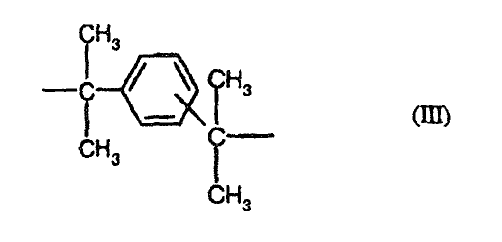
where
Y denotes carbon and
R²¹ and R²² individually chooseable for each Y and independently of each other denote hydrogen or C₁-C₆-alkyl,
m denotes an integer from 4 to 7, preferably 4 or 5, with the proviso that R²¹ and R²² simultaneously denote alkyl on at least one Y atom,
C) 0.01 to 5% by weight relative to the total composition of zinc sulphide,
D) at least 0.3% by weight relative to the total composition of polyolefin waxes, and
E) 0 to 50% by weight relative to the total composition of one or more filler and reinforcing materials
the sum of the proportions of the components adding up to 100% by weight, **characterized in that** a polyolefin wax is included.

2. Moulding compositions according to Claim 1, **characterized in that** the polyolefin wax is included at 0.3% by weight.

3. Moulding compositions comprising
A) one or more polyesters,
B) 10 to 40% by weight of a flame retardant component containing as nitrogen compound B1) melamine cyanurate, melamine, melamine borate, melamine oxalate, melamine phosphate prim., melamine phosphate sec. and melamine pyrophosphate sec., polymeric melamine phosphate and neopentyl glycol boric acid melamine, urea phosphate green, ammonium polyphosphate, allantoin compounds, and also their salts with phosphoric acid, boric acid or pyrophosphoric acid, and glycol urils or their salts or ammonium salts and a phosphorus compound B2) of the formula (I) 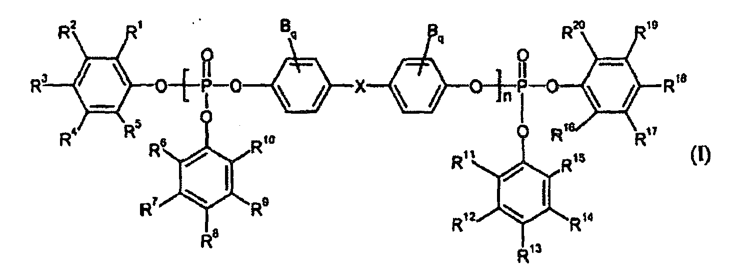 where
R¹ to R²⁰, independently of each other, denote hydrogen or a linear or branched alkyl group of up to 6 carbon atoms,
n denotes an average value of 0.5 to 50, and
B denotes C₁-C₁₂-alkyl or halogen,
q in either occurrence independently denotes 0, 1 or 2,
X denotes a single bond C=O, S, O, SO₂, C(CH₃)₂, C₁-C₅-alkylene, C₂-C₅-alkylidene, C₅-C₆-cycloalkylidene, C₆-C₁₂-arylene, onto which further aromatic rings, which optionally contain hetero atoms, may be condensed, or a radical corresponding to formula (II) or (III) 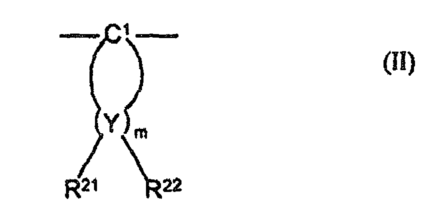 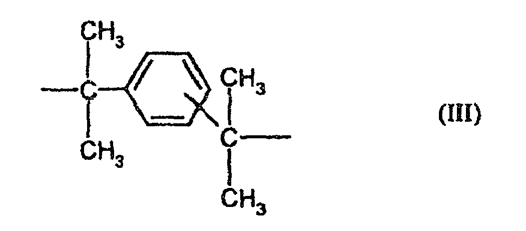
where
Y denotes carbon and
R²¹ and R²² individually chooseable for each Y and independently of each other denote hydrogen or C₁-C₆-alkyl,
m denotes an integer from 4 to 7, preferably 4 or 5, with the proviso that R²¹ and R²² simultaneously denote alkyl on at least one Y atom,
C) 0.01 to 5% by weight relative to the total composition of zinc sulphide,
D) 0 to 40% by weight relative to the total composition of further additives and
E) 0 to 50% by weight relative to the total composition of one or more filler and reinforcing materials
the sum of the proportions of the components adding up to 100% by weight.

4. Moulding compositions according to any one of Claims 1 to 3, **characterized in that** component A) is a polyalkylene terephthalate or a mixture of a plurality of polyalkylene terephthalates.

5. Moulding compositions according to any one of Claims 1 to 3, **characterized in that** component A) is polyethylene terephthalate, polybutylene terephthalate or a mixture thereof.

6. Moulding compositions according to one or more of the preceding claims, **characterized in that** the proportion of the flame retardant component B) contributes 17 to 24% by weight relative to the total composition.

7. Moulding compositions according to one or more of the preceding claims, **characterized in that** the proportion of the nitrogen compound B1) contributes 8 to 12% by weight relative to the total composition.

8. Moulding compositions according to one or more of the preceding claims, **characterized in that** the proportion of the phosphorus compound B2) contributes 9 to 12% by weight relative to the total composition.

9. Moulding compositions according to any of Claims 1 to 3, **characterized in that** the nitrogen compound B1) is melamine cyanurate.

10. Moulding compositions according to one or more of the preceding claims, **characterized in that** the phosphorus compound B2) is bisphenol A-bis-diphenyl phosphate.

11. Moulding compositions according to any one of the preceding claims comprising further additives selected from the group consisting of anti-thermal decomposition agents, anti-thermal crosslinking agents, agents which protect from damage due to ultraviolet light, plasticizers, flow enhancers, processing aids, flame-inhibiting substances, lubricating and de-moulding agents, nucleating agents, anti-static agents, stabilizers, dyes and pigments.

12. Moulding compositions according to any one of the preceding claims comprising glass fibres.

13. Use of moulding compositions according to any one of Claims 1 to 12 for producing mouldings, sheeting or fibres.

14. Mouldings, sheeting or fibres obtainable from moulding compositions according to any one of Claims 1 to 12.

## Revendications

1. Masses de moulage contenant:
A) un ou plusieurs polyesters,
B) 10 à 40 % en poids d'un composant ignifugeant contenant comme composé azoté B.1) du cyanurate de mélamine, de la mélamine, du borate de mélamine, de l'oxalate de mélamine, du phosphate de mélamine prim., du phosphate de mélamine sec. et du pyrophosphate de mélamine sec., du phosphate de mélamine polymère ainsi que de la mélamine d'acide néopentylglycolborique, du carbonate de guanidine, du cyanurate de guanidine prim., du phosphate de guanidine prim., du phosphate de guanidine sec., du sulfate de guanidine prim., du sulfate de guanidine sec., de la guanidine d'acide pentaérythrite borique, de la guanidine d'acide néopentylglycolborique, de l'uréephosphate vert, de l'urée-cyanurate, du melem, de la mélone, du polyphosphate d'ammonium, du tris(hydroxyéthyl)isocyanurate ou leurs produits réactionnels avec des acides carboxyliques, de la benzoguanamine et ses produits d'addition ou, selon le cas, sels ainsi que leurs produits substitués sur l'azote ainsi que leurs sels et produits d'addition, les composés d'allantoïne ainsi que leurs sels avec de l'acide phosphorique, de l'acide borique ou de l'acide pyrophosphorique ainsi que les glycoluriles ou ses sels ou sels d'ammonium et un composé phosphoré B.2) de formule (I) 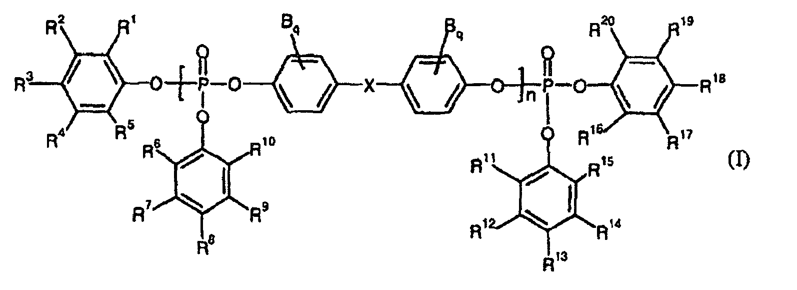 dans laquelle
R¹ à R²⁰ signifient, indépendamment l'un de l'autre, l'hydrogène, un groupe alkyle linéaire ou ramifié avec jusqu'à 6 atomes de carbone,
n a une valeur moyenne comprise entre 0,5 et 50, et
B signifie un alkyle en C₁-C₁₂ ou un halogène,
q signifie chaque fois indépendamment l'un de l'autre, 0, 1 ou 2,
X signifie une liaison simple, C=O, S, 0, SO₂, C(CH₃)₂, un alkylène en C₁-C₅, un alkylidène en C₂-C₅, un cycloalkylidène en C₅-C₆, un arylène en C₆-C₁₂, sur lequel d'autres cycles aromatiques contenant éventuellement des hétéroatomes peuvent être condensés, ou signifie un radical selon la formule (II) ou (III), 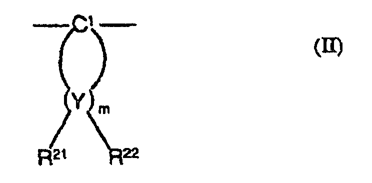 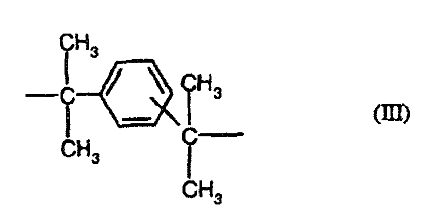
dans laquelle :
Y signifie le carbone, et
R²¹ et R²², pour chaque Y qu'on choisit individuellement, indépendamment l'un de l'autre, signifient l'hydrogène ou un alkyle en C₁-C₆,
m signifie un nombre entier de 4 à 7, de préférence 4 ou 5, étant entendu que sur au moins un atome Y R²¹ et R²² sont simultanément alkyle,
C) 0,01 à 5 % en poids, sur base de la composition totale, de sulfure de zinc,
D) au moins 0,3 % en poids, sur base de la composition totale, de cire de polyoléfine, ainsi que
E) 0 à 50 % en poids, sur base de la composition totale, d'une ou de plusieurs matières de charge et de renforcement ;
la somme des proportions des composants faisant 100 % en poids, **caractérisées en ce qu'**elles contiennent une cire de polyoléfine.

2. Masses de moulage selon la revendication 1, **caractérisées en ce qu'**elles contiennent la cire de polyoléfine jusqu'à 0,3 % en poids.

3. Masses de moulage contenant:
A) un ou plusieurs polyesters,
B) 10 à 40 % en poids d'un composant ignifugeant contenant comme composé azoté B.1) du cyanurate de mélamine, de la mélamine, du borate de mélamine, de l'oxalate de mélamine, du phosphate de mélamine prim., du phosphate de mélamine sec. et du pyrophosphate de mélamine sec., du phosphate de mélamine polymère ainsi que de la mélamine d'acide néopentylgycolborique, de l'urée-phosphate vert, du polyphosphate d'ammonium, des composés d'allantoïne ainsi que leurs sels avec de l'acide phosphorique, de l'acide borique ou de l'acide pyrophosphorique ainsi que des glycoluriles ou leurs sels ou sels d'ammonium et un composé phosphoré B.2) de formule (I) 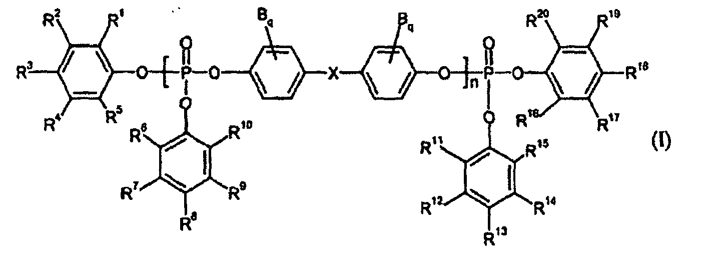 dans laquelle:
R¹ à R²⁰ signifient, indépendamment l'un de l'autre, l'hydrogène, un groupe alkyle linéaire ou ramifié avec jusqu'à 6 atomes de carbone,
n a une valeur moyenne comprise entre 0,5 et 50, et
B signifie un alkyle en C₁-C₁₂ ou un halogène,
q signifie chaque fois indépendamment l'un de l'autre, 0, 1 ou 2,
X signifie une liaison simple, C=O, S, O, SO₂, C (CH₃) ₂, un alkylène en C₁-C₅, un alkylidène en C₂-C₅, un cycloalkylidène en C₅-C₆, un arylène en C₆-C₁₂, sur lequel d'autres cycles aromatiques contenant éventuellement des hétéroatomes peuvent être condensés, ou signifie un radical selon la formule (II) ou (III), 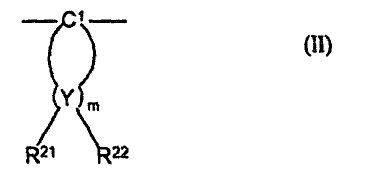 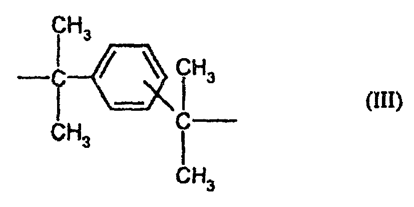
dans laquelle :
Y signifie le carbone, et
R²¹ et R²², pour chaque Y qu'on choisit individuellement, indépendamment l'un de l'autre, signifient l'hydrogène ou un alkyle en C₁-C₆,
m signifie un nombre entier de 4 à 7, de préférence 4 ou 5, étant entendu que sur au moins un atome Y R²¹ et R²² sont simultanément alkyle,
C) 0,01 à 5 % en poids, sur base de la composition totale, de sulfure de zinc,
D) 0 à 40 % en poids, sur base de la composition totale, d'autres additifs, ainsi que
E) 0 à 50 % en poids, sur base de la composition totale, d'une ou de plusieurs matières de charge et de renforcement ;
la somme des proportions des composants faisant 100 % en poids.

4. Masses de moulage selon l'une des revendications 1 à 3, **caractérisées en ce que** le composant A) est un téréphtalate de polyalkylène ou un mélange de plusieurs téréphtalates de polyalkylène.

5. Masses de moulage selon l'une des revendications 1 à 3, **caractérisées en ce que** le composant A) est un téréphtalate de polyéthylène, un téréphtalate de polybutylène ou un mélange de ces composés.

6. Masses de moulage selon l'une ou plusieurs des revendications précédentes, **caractérisées en ce que** la proportion du composant ignifugeant B) va de 17 à 24 % en poids, sur base de la composition totale.

7. Masses de moulage selon l'une ou plusieurs des revendications précédentes, **caractérisées en ce que** la proportion du composé azoté B.1) va de 8 à 12 % en poids, sur base de la composition totale.

8. Masses de moulage selon l'une ou plusieurs des revendications précédentes, **caractérisées en ce que** la proportion du composé phosphoré B.2) va de 9 à 12 % en poids, sur base de la composition totale.

9. Masses de moulage selon l'une des revendications 1 à 3, **caractérisées en ce que** le composé azoté B.1) est le cyanurate de mélamine.

10. Masses de moulage selon l'une ou plusieurs des revendications précédentes, **caractérisées en ce que** le composé phosphoré B.2) est du bisphénol A-bis-diphénylphosphate.

11. Masses de moulage selon l'une des revendications précédentes contenant d'autres additifs choisis parmi des produits contre l'altération à la chaleur, des produits contre la réticulation sous l'effet de la chaleur, des produits contre l'altération par la lumière ultraviolette, des plastifiants, des adjuvants de plasticité et de traitement, des substances ignifugeantes, des lubrifiants et des agents de démoulage, des agents de nucléation, des antistatiques, des stabilisants ainsi que des colorants et des pigments.

12. Masses de moulage selon l'une des revendications précédentes contenant des fibres de verre.

13. Utilisation des masses de moulage selon l'une des revendications 1 à 12 pour la fabrication de corps moulés, de feuilles ou de fibres.

14. Corps moulés, feuilles ou fibres qu'on obtient à partir des masses de moulage selon l'une des revendications 1 à 12.
